# EUROPEAN PATENT SPECIFICATION

(11) **EP 2 159 265 B1**
(45) Date of publication and mention of the grant of the patent: **02.12.2015**
(21) Application number: 08752733.9
(22) Date of filing: 14.05.2008
(51) Int. Cl.: C08L 77/00, C08K 3/22, C08K 3/24, C08K 5/13, C08K 5/3492

(54) **FLAME RETARDANT POLYAMIDE RESIN COMPOSITION**
FLAMMWIDRIGE POLYAMIDHARZZUSAMMENSETZUNG
COMPOSITION DE RÉSINE POLYAMIDE IGNIFUGE

(30) Priority: 17.05.2007 JP 2007131691
(43) Date of publication of application: 03.03.2010
(73) Proprietor: MITSUBISHI ENGINEERING-PLASTICS CORPORATION, Tokyo 105-0021 (JP)
(72) Inventor: TSUNODA, Morio, Hiratsuka-shi Kanagawa 254-0016 (JP); YAMANAKA, Yasushi, Hiratsuka-shi Kanagawa 254-0016 (JP)
(74) Representative: Müller-Boré & Partner Patentanwälte PartG mbB
(86) International application number: PCT/JP2008/058862
(87) International publication number: WO 2008/143096

(56) References cited:
- EP-A1- 1 630 203
- WO-A1-00/09606
- WO-A1-2004/111131
- JP-A- 10 505 875
- JP-A- 2004 204 194

## Description

The present invention relates to a flame-retardant polyamide resin composition. For more details, the present invention relates to a flame-retardant polyamide resin composition excellent in tracking resistance and glow-wire characteristic, which are indices for expressing electrical safety of electric/electronic components, and excellent also in anti-corrosive performance for metals, which are preferably applicable to electric/electronic components having metal contacts or metal terminals.

Polyamide resin has been used in the fields of automotive components, machine components, and electric/electronic components, by virtue of its excellent mechanical strength and heat resistance. In particular in recent years, required levels of flame retardation have been growing high in applications such as connectors or plugs having metal terminals, and also in applications of electric/electronic components such as switches or breakers having metal contacts. The situation has raised an additional need of flame retardation at a level higher than that achievable by self-extinguishing property inherent to the polyamide resin. A large number of examinations have, therefore, been made on advanced level of flame retardation, more specifically on materials approved under Underwriter's Laboratories standards UL94 V-0. One of the general methods has been such as adding a halogen-containing flame retarder or a triazine-base flame retarder.

The halogen-containing flame retarder is, however, anticipated to produce a corrosive hydrogen halide or to produce toxic substances in the process of combustion, so that there is a growing movement of limiting use of plastic products mixed with the halogen-containing flame retarder from the environmental viewpoint. For this reason, halogen-free, triazine-base flame retarders have been attracting attention, in place of the halogen-containing flame retarder. Among the triazine-base flame retarders, especially materials mixed with melamine cyanurate are widely investigated.

On the other hand, also for applications of electric/electronic components, there are growing requirements on glow-wire characteristic and tracking resistance, typically represented by European IEC Standards. In particular, as for connector components, a required level of glow-wire ignition temperature (occasionally referred to as "GWIT", hereinafter) under IEC60695-2-13 has recently been revised from 725°C or above to 775°C or above. It has, therefore, been becoming difficult for the polyamide resin compositions mixed with melamine cyanurate to satisfy the condition, so that the situation has raised a further need of searching for another non-halogen-base flame retarder.

Patent Document 1 discloses a flame-retardant reinforced polyamide resin composition which contains (a) a polyamide resin, (b) a triazine-ring-containing compound having a weight loss temperature of 400°C or above, and (c) an inorganic reinforcing material, wherein the ratio of comprising of the individual components (a), (b) and (c) in the composition, respectively denoted as A, B and C% by weight, satisfies 1≤B/A≤2, 5≤C≤50, and A+B+C=100. Melamine sulfate is exemplified as component (b). The resin composition is, however, poor in the mechanical strength such as tensile strength, due to its large ratio of comprising of component (b), and is not suitably applied to electric/electronic components where the strength is needed. No description is given on glow-wire characteristic and tracking resistance.

Patent Documents 2 and 3 relate to resin compositions which contain a thermoplastic resin, added with a melamine-base flame retarder and other components. These documents do not exemplify any resin composition containing a polyamide resin added with melamine sulfate in Examples. However, use of the flame retarder described in Patent Document 2, such as double salt of melamine/melam/melem polyphosphate, melamine polymetaphosphate and polyphosphoric acid amide, results in only poor levels of glow-wire characteristic. On the other hand, use of the thermoplastic resin composition described in Patent Document 3 results in only poor levels of glow-wire characteristic and tensile strength.

The present inventors also found from our investigations that use of a melamine-base flame retarder which contains a sulfur component, such as melamine sulfate, for manufacturing of electric/electronic components raised a problem in that a metal-corroding gas, such as containing sulfate ion, sulfur oxides and hydrogen sulfide, was produced due to heat in association with current supply, thereby metal contacts or terminals are corroded to cause conduction failure.

Patent Document 4 describes a flame-retardant resin composition, which comprises (R) a base resin, (A) a flame retardant and (B) a flame-retardant auxiliary, wherein the flame retardant (A) comprises a salt of (A1) an amino group-containing triazine compound with (A2) at least one member selected from the group consisting of a sulfuric acid and a sulfonic acid, and the flame-retardant auxiliary (B) comprises at least one member selected from the group consisting of (B1) an aromatic resin, (B2) a cyclic urea-series compound or a derivative thereof, (B3) an amino group-containing triazine compound and (B4) an inorganic metal-series compound. The base resin (R) and/or component (B1) may be a polyamide.
Patent Document 1: Japanese Laid-Open Patent Publication No. 2000-119512
Patent Document 2: Japanese Laid-Open Patent Publication No. 2003-226818
Patent Document 3: WO2003-046084
Patent Document 4: EP 1 630 203

### Problems to be Solved by the Invention

It is, therefore, an object of the present invention to provide a flame-retardant polyamide resin composition and a molded product composed thereof, excellent in all of flame retardation, glow-wire characteristic, tracking resistance and mechanical strength, and also in anti-corrosive performance for metals.

The present inventors found out, after our extensive investigations, that a polyamide resin composition which satisfies required levels of flame retardation, glow-wire characteristic, tracking resistance and mechanical strength at the same time, and is also excellent in anti-corrosive performance for metals, may be obtained by using a polyamide resin, and by adding thereto specific amounts of a specific salt which contains an aminotriazine compound and at least one species selected from the group consisting of sulfuric acid, pyrosulfuric acid and organosulfonic acid; and a specific compound having an anti-corrosive effect for metals, and finally reached the present invention.

A first aspect of the present invention relates to a flame-retardant polyamide resin composition containing, per 100 parts by weight of polyamide resin (A) ; 10 to 60 parts by weight of salt (B) which contains an aminotriazine compound and at least one species selected from the group consisting of sulfuric acid, pyrosulfuric acid and organosulfonic acid (component (B) may occasionally be referred to as "aminotriazine-base flame retarder", hereinafter); compound (C) which contains at least one species selected from the group consisting of hindered phenol-base compound, hydrotalcite and hydroxide of alkaline earth metal and 1 to 50 parts by weight of at least one modified olefinic polymer (D-1), wherein the ratio of comprising (C)/(B) by weight of component (C) and component (B) is 0.0005 to 0.2, and wherein the modified olefinic polymer (D-1) has a melt volume rate (MVR) of 100 to 500 cm³/10 min, when measured conforming to JIS K7210, at 180°C and under a load of 21.17N.

The flame-retardant polyamide resin composition of the present invention is excellent generally in flame retardation, glow-wire characteristic, tracking resistance and mechanical strength, and also in anti-corrosive performance for metals, and may, therefore, suitably be applied to electric/electronic components having metal contacts or metal terminals, such as connectors, plugs, breakers, switches and electromagnetic switches.

The present invention will be detailed below. Note that any numerical expression using "to" in this patent specification means a range which contains the numerals placed before and after "to" as the lower limit value and the upper limit value, respectively. Note also that any "group", such as alkyl group, in this patent specification may have a substituent, or may have no substituent, unless otherwise specifically stated. As for any group having a specific number of carbon atoms, the number of carbon atoms does not contain the number of carbon atoms owned by the substituent.

### Polyamide Resin (A)

The polyamide resin (A) in the present invention may be polyamide resins obtained by polycondensation of polymerizable ω-amino acid, lactam which preferably has a three-membered or larger ring, dicarboxylic acid or diamine; or copolymers or polymer blends containing the polyamide resins.

The ω-amino acid may be exemplified by amino acids such as 6-aminocaproic acid, 7-aminoheptanoic acid, 9-aminononanoic acid, 11-aminoundecanoic acid, 12-aminododecanoic acid, 2-chloro-*p*-aminomethylbenzoic acid, 2-methyl-*p*-aminomethylbenzoic acid, and 4-aminomethylbenzoic acid.

The lactam may be exemplified by ε-caprolactam, enantholactam, capryl lactam, lauryl lactam, α-pyrrolidone, and α-piperidone.

The dicarboxylic acid may be exemplified by aliphatic dicarboxylic acid, and aromatic dicarboxylic acid.

Specific examples of the aliphatic dicarboxylic acid includes adipic acid, glutaric acid, pimelic acid, suberic acid, azelaic acid, sebacic acid, undecanedioic acid, dodecadioic acid, hexadecadioic acid, hexadecenedioic acid, eicosanedioic acid, eicosadienedioic acid, diglycolic acid, and 2,2,4-trimethyladipic acid. The aliphatic dicarboxylic acid herein is defined to include alicyclic dicarboxylic acid such as 1,4-cyclohexyldicarboxylic acid.

The aromatic dicarboxylic acid is a dicarboxylic acid having, in the molecule thereof, at least one aromatic ring such as benzene ring and naphthalene ring, and may specifically be exemplified by terephthalic acid, isophthalic acid, 2-chloroterephthalic acid, 2-methylterephthalic acid, 5-methylisophthalic acid, sodium 5-sulfoisophthalate, hexahydroterephthalic acid, hexahydroisophthalic acid, and xylylenedicarboxylic acid.

The diamine may be exemplified by aliphatic diamine, and aromatic diamine.

Specific examples of the aliphatic diamine include pentamethylenediamine, hexamethylenediamine, tetramethylenediamine, nonamethylenediamine, undecamethylenediamine, dodecamethylenediamine, and 2,2,4-(or 2,4,4)-trimethylhexamethylenediamine. Also alicyclic diamines, such as bis-(4,4'-aminocyclohexyl)methane, bis(3-methyl-4-aminocyclohexyl)methane, 1,3-bis(aminomethyl)cyclohexane, 1,4-bis(aminomethyl)cyclohexane, 1-amino-3-aminomethyl-3,5,5-trimethylcyclohexane, and 2,2-bis(4-aminocyclohexyl)propane, may be included in the aliphatic diamine.

The aromatic diamine is a diamine having, in the molecule thereof, at least one aromatic ring such as benzene ring and naphthalene ring, and may specifically be exemplified by *m*-xylylene diamine, *p*-xylylenediamine, and terephthalic diamine.

Source materials for the above-described polyamide resin may be compounds having 5 to 10 carbon atoms. The mechanical strength and toughness may be improved by selecting a number of carbon atoms of 5 or larger, and flame retardation may be improved by selecting a number of carbon atoms of 10 or smaller. More specifically, ε-caprolactam as the lactam; adipic acid as the dicarboxylic acid; terephthalic acid and isophthalic acid as the aromatic dicarboxylic acid; pentamethylenediamine and hexamethylenediamine as the aliphatic diamine; and xylylenediamine as the aromatic diamine are readily available, and also advantageous in terms of price.

The salt of diamine and dicarboxylic acid may be obtained by neutralizing the both in an aqueous solution under increased pressure at high temperatures. The polyamide resin used in the present invention may be manufactured by allowing the thus-obtained salt, or the above described ω-amino acid and lactam to condensate under increased pressure at high temperatures, so as to proceed oligomerization, followed by reduction in the pressure so as to proceed the polymerization until an appropriate melt viscosity is achieved.

The polyamide resin (A) in the present invention may preferably be exemplified by aliphatic polyamide resins and semi-aromatic polyamide resins described in the next.

Examples of the aliphatic polyamide resin include polyamide 6 derived mainly from ε-caprolactam or 6-aminocaproic acid; polyamide 66 derived mainly from a salt formed by hexamethylenediamine and adipic acid; and polyamide 6/66 copolymer derived mainly from a salt formed by hexamethylenediamine and adipic acid and ε-caprolactam or 6-aminocaproic acid. Among them, polyamide 6 and polyamide 66 are more preferable.

The aliphatic polyamide resin preferably has a viscosity number of 70 to 200 ml/g when measured conforming to ISO307, at 25°C, in a 96% by weight sulfuric acid, at a polyamide resin concentration of 0.5% by weight. The mechanical strength and appearance of the molded product may be improved by adjusting the viscosity number of the resin to 70 ml/g or larger, meanwhile the compoundability and moldability may be improved, and thereby the glow-wire characteristic and appearance of molded products may be improved, by adjusting the viscosity number to 200 ml/g or smaller.

The semi-aromatic polyamide resin herein means a polyamide resin which is composed of at least one species of polyamide compositional unit (a) selected from a salt formed by an aliphatic diamine and an aromatic dicarboxylic acid, and a salt formed by an aromatic diamine and an aliphatic dicarboxylic acid; or a polyamide copolymer which is composed of the above-described polyamide compositional unit (a) and at least one species of aliphatic polyamide compositional unit (b) selected from a lactam or salt of aliphatic diamine and aliphatic dicarboxylic acid, preferably having a ratio by weight of the units (a) and (b) of (a)/(b)=100/0 to 5/95. More preferable ratio by weight is given by (a) / (b)=100/0 to 7.5/92.5, and still more preferable ratio is given by (a)/(b)=100/0 to 30/70, from the viewpoints of crystallization speed and mechanical characteristics such as rigidity. The individual compositional units (a) and (b) preferably distribute in a uniform manner. The glow-wire characteristic and flame retardation may further be improved, by configuring the polyamide compositional units in this way.

Specific examples of such desirable semi-aromatic polyamide resin include polyamide MXD6 derived mainly from a salt formed by *m*-xylylene diamine and adipic acid; polyamide MP6 derived mainly from *m*-xylylene diamine and *p*-xylylene diamine and adipic acid; polyamide 6I derived mainly from a salt formed by hexamethylenediamine and isophthalic acid; copolymer (polyamide 66/6I) composed of a salt formed by hexamethylenediamine and adipic acid/a salt formed by hamethylenediamine and isophthalic acid; and copolymer (polyamide 6I/6T) composed of a salt formed by hexamethylenediamine and isophthalic acid/a salt formed by hexamethylenediamine and terephthalic acid. Polyamide MXD6, polyamide MP6 and polyamide 6I/6T are more preferable.

The semi-aromatic polyamide resin preferably has a specific range of melt viscosity. The melt viscosity preferably falls in the range from 75 to 800 Pa·s (750 to 8000 poise), more preferably from 80 to 700 Pa·s (800 to 7000 poise), and still more preferably 85 to 600 Pa·s (850 to 6000 poise), when measured using a capillary rheometer (from Toyo Seiki Seisaku-sho, Ltd., Capillograph 1C), at 250°C, under a sheer rate of 100 sec⁻¹. The melt viscosity is desirably adjusted to 75 Pa·s (750 poise) or larger in view of improving the glow-wire characteristic and mechanical strength, and desirably adjusted to 800 Pa·s (8000 poise) or smaller in view of keeping the flame retardation at a desirable level, and of preventing the fluidity and moldability from being degraded.

The resin composition is preferably manufactured and molded at a resin temperature of 290°C or lower, in view of suppressing molding failure and of ensuring desirable levels of glow-wire characteristic and flame retardation, since the aminotriazine-base flame retarder described later starts to decompose when the temperature of the molten resin composition reaches 290°C or higher. However, at a temperature of 290°C or lower, the aminotriazine-base flame retarder may be degraded in the dispersibility in the process of manufacturing of the resin composition, or the resin composition is degraded in the fluidity in the process of molding, enough to make thin molding difficult. As the polyamide resin of the present invention, it may, therefore, be preferable to use a polyamide resin having a melting point lower as possible than 290°C, but capable of ensuring desirable levels of glow-wire characteristic and flame retardation.

The terminal of the polyamide resin (A) in the present invention may be terminated by a carboxylic acid or amine. For the termination, a carboxylic acid having 6 to 22 carbon atoms or amine may preferably be used. More specifically, the carboxylic acid adoptable for the termination include aliphatic monocarboxylic acid such as caproic acid, caprylic acid, capric acid, lauric acid, myristic acid, palmitic acid, stearic acid, and behenic acid. The amine may be exemplified by aliphatic primary amines such as hexylamine, octylamine, decylamine, lauryl amine, myristylamine, palmitylamine, stearylamine, and behenylamine. Amounts of the carboxylic acid or amine used for the termination may preferably be 30 µeq/g or around, from the viewpoint of melt viscosity of the resin composition in the process of molding.

### Aminotriazine-Base Flame Retarder (B)

In the present invention, a salt of an aminotriazine compound, and at least one species of compound selected from the group consisting of sulfuric acid, pyrosulfuric acid and organosulfonic acid, is used as a flame retarder.

The aminotriazine compound in the present invention is preferably an aminotriazine compound having a 1,3,5-triazine skeleton, and more preferably any of those represented by the formula (1) below: 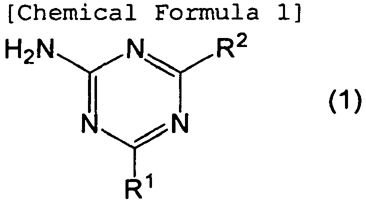 In the formula (1), each of R¹ and R² independently represents an amino group, alkyl group having 1 to 4 carbon atoms, or aryl group having 6 to 10 carbon atoms.

The alkyl group having 1 to 4 carbon atoms is preferably a methyl group, ethyl group or propyl group, and the aryl group having 6 to 10 carbon atoms is preferably a phenyl group. The amino group may be substituted by a maximum of three substituents, wherein the substituent may be exemplified by hydrocarbon groups, which are preferably alkyl group having 1 to 4 carbon atoms, or an aryl group having 6 to 10 carbon atoms.

The aminotriazine compound may specifically be exemplified by melamine, benzoguanamine, and methyl guanamine, wherein two or more species of them may be used in combination. The aminotriazine compound may be a dimer of any of these compounds, or may be a condensate of these compounds (melam, melem or melon).

Although particle size of these aminotriazine compounds is not specifically limited, the average particle size (median diameter) preferably falls in the range from 0.1 to 50 µm, and more preferably from 0.1 to 30 µm, from the viewpoints of mechanical strength and appearance of the molded products.

The salt formed by the aminotriazine compound and sulfuric acid may be exemplified by melamine sulfates (melamine sulfate, dimelamine sulfate or guanylmelamine sulfate); non-condensed melamine sulfates corresponded to the melamine sulfates, such as melamine sulfite; and melem salt, melam salt, melon salt or guanamine salt corresponded to the above-described, non-condensed melamine sulfates. Any sulfuric acid may be used without special limitation, so far as it is generally available. Concentration of sulfuric acid is not specifically limited, and both of concentrated sulfuric acid and diluted sulfuric acid may be adoptable. Use of diluted sulfuric acid is more preferable, from the viewpoint of handlability.

The salt formed by an aminotriazine compound and pyrosulfuric acid may be exemplified by melamine pyrosulfates (melamine pyrosulfate, dimelamine pyrosulfate or dimelam pyrosulfate); and melem salt, melam salt, melon salt or guanamine salt corresponded to the melamine pyrosulfate salt. For example, dimelam pyrosulfate may be manufactured according to the method described in Japanese Laid-Open Patent Publication No. H10-306082.

The organosulfonic acid used for manufacturing the salt formed by an aminotriazine compound and an organosulfonic acid may be exemplified by alkanesulfonic acids having 1 to 10 carbon atoms (for example, methane sulfonic acid, ethanesulfonic acid or ethanedisulfonic acid), and arylsulfonic acids having 6 to 20 carbon atoms (for example, benzene sulfonic acid or toluenesulfonic acid).

The salt formed by an aminotriazine compound and an organosulfonic acid may be exemplified by melamine organosulfonates (melamine methanesulfonate, melam methanesulfonate, melem methanesulfonate, double salt of melamine/melam/melem methanesulfonate or guanamine methanesulfonate).

Ratio of sulfur atom in these aminotriazine-base flame retarders is preferably 3 to 20% by weight, in view of minimizing adhesion of pollutant to mold in the process of molding. The content of sulfur atom herein is defined by a total of sulfur existing in a form of salt with the aminotriazine compound, and unbound free sulfur.

The aminotriazine-base flame retarders may be coated with aminosilane or epoxysilane compound, epoxy resin, urethane resin or acryl resin, for the purpose of improving adhesiveness between the flame retarder and the polyamide resin, and of preventing degradation of the mechanical strength.

Of the above-described aminotriazine-base flame retarders, melamine sulfate is particularly preferable in view of availability. Melamine sulfate may be manufactured typically by the method described, for example, in Japanese Laid-Open Patent Publication No. H8-231517.

Amount of addition of the aminotriazine-base flame retarder (B) is 10 to 60 parts by weight, more preferably 15 to 55 parts by weight, and still more preferably 20 to 50 parts by weight, per 100 parts by weight of the polyamide resin (A). The glow-wire characteristic may effectively be improved by adjusting the amount of addition to 10 parts by weight or more, and the mechanical strength may be kept at a desirable level by adjusting it to 60 parts by weight or less.

### Compound (C)

In the present invention, the specific compound (C) is added in order to suppress metal contacts and metal terminals, which are incorporated into electric/electronic components, from being corroded by a corrosive gas possibly produced from the resin composition typically due to heat in association with current supply. The compound (C) in the present invention is at least a single species of compound selected from the group consisting of hindered phenol-base compound (C-1), hydrotalcite (C-2) and hydroxide of alkaline earth metal (C-3), which has an effect of suppressing corrosion of metals. As compared with any other stabilizers, the (C) component in the present invention is supposed to have a larger effect of trapping the corrosive gas, and a larger effect of neutralizing residual sulfuric acid component in melamine sulfate which is causative of producing the corrosive gas, and consequently has an extremely large effect of suppressing corrosion of metals.

The hindered phenol-base compound is a compound generally used as an antioxidant and process stabilizer, and has at least one 2,6- or 2,4-alkyl-substituted phenol structure in the molecule.

The hindered phenol-base compound (C-1) may specifically be exemplified by triethylene glycol-bis[3-(3-*tert*-butyl-5-methyl-4-hydroxyphenyl)propionate], 1,6-hexanediol-bis[3-(3,5-di-*tert*-butyl-4-hydroxyphenyl) propionate], pentaerithritol tetrakis[3-(3,5-di-*tert*-butyl-4-hydroxyphenyl)propionate], N,N'-hexamethylenebis(3,5-di-*tert*-butyl-4-hydroxy-hydrocinnamide), 3,5-di-*tert-*butyl-4-hydroxybenzylphosphonate diethyl ester, octadecyl-3-(3,5-di-*tert*-butyl-4-hydroxyphenyl)propionate, 1,3,5-trimethyl-2,4,6-tris(3,5-di-*tert*-butyl-4-hydroxybenzyl)benzene, 2,4-bis-(*n*-octylthio)-6-(4-hydroxy-3,5-di-*tert*-butylanilino)-1,3,5-triazine, and 2,2-thio-diethylenebis[3-(3,5-di-*tert-*butyl-4-hydroxyphenyl)propionate]. Among them, N,N'-alkylenebis(3,5-di-alkyl-4-hydroxy-hydrocinnamide) represented by the formula (2) below is preferable, since it has a desirable compatibility with the polyamide resin, and is less causative of degradation in the mechanical strength and troubles in molding such as generation of gas, even when mixed at high concentrations.

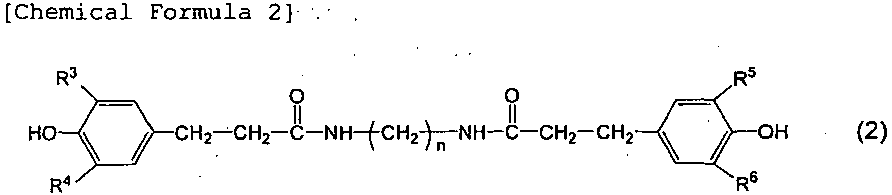

In the formula (2), n represents an integer of 1 to 10, and each of R³, R⁴, R⁵ and R⁶ independently represents an alkyl group having 1 to 8 carbon atoms. n is preferably an integer of 2 to 10, and each of R³, R⁴, R⁵ and R⁶ preferably represents an alkyl group having 1 to 6 carbon atoms.

The compound represented by the formula (2) may be exemplified by a compound having 6 for n, and having a *tert*-butyl group for each of R³, R⁴, R⁵ and R⁶, which is commercially available under a trade name of "Irganox 1098" from CIBA Specialty Chemicals, Inc.

As the hydrotalcite (C-2), hydrotalcites described in Japanese Laid-Open Patent Publication No. S60-1241 or H9-59475 , such as hydrotalcite compounds represented by the formula (3) below, may be adoptable.

[M²⁺₁₋₃M³⁺ₓ(OH)₂]^{x+}[Aⁿ⁻_{x/n}·mH₂O]^{x-} (3)

In the formula, M²⁺ represents a divalent metal ion such as Mg²⁺, Mn²⁺, Fe²⁺ and Co²⁺, and M³⁺ represents a trivalent metal ion such as Al³⁺, Fe³⁺ and Cr³⁺. An represents an n-valent (particularly monovalent or divalent) anion such as CO₃²⁻, OH⁻, HPO₄²⁻ and SO₄²⁻. x preferably satisfies 0<x<0.5, more preferably 0.2≤<x≤0.4, and m satisfies 0≤m<1, more preferably 0≤m≤0.6.

The hydrotalcite (C-2) may be subjected to surface treatment using a surface modifying agent, for the purpose of improving the dispersibility in the polyamide resin composition, and of preventing degradation in the toughness and mechanical strength due to coagulation. The surface modifying agent may be exemplified by higher aliphatic acid, higher fatty acid ester compound, aminosilane or epoxysilane compound, epoxy resin, urethane resin, and acryl resin.

The hydrotalcites may be commercially available under trade names of "DHT-4A", "DHT-4A-2" and "Alcamizer" from Kyowa Chemical Industry Co., Ltd.

As the hydroxide of alkaline earth metal (C-3), magnesium hydroxide or calcium hydroxide may be exemplified as preferable examples.

The compound (C) is comprised so as to adjust the ratio of comprising (C)/(B) by weight of component (C) and component (B) to 0.0005 to 0.2, more preferably to 0.002 to 0.15, still more preferably to 0.003 to 0.12, and furthermore preferably to 0.003 to 0.1. Corrosion of metals may effectively be suppressed by adjusting (C) / (B) to 0.0005 or larger, and the mechanical strength may be kept at a desirable level by adjusting the value to 0.2 or smaller. Two or more species of the (C) component may be used in combination.

### Polymer (D)

In the present invention, polymer (D) is a modified olefinic polymer (D-1) and is comprised mainly for the purpose of improving tracking resistance and impact resistance of the resin composition. Generally, olefin-vinyl-base copolymer (D-2), and hydrogenated product (D-3) of a block copolymer of vinyl aromatic compound polymer block "a" and conjugated diene compound polymer block "b" may be used as said polymer (D). The polymer (D) may be manufactured by any publicly-known method. The polymer (D) preferably has a glass transition temperature of 0°C or lower, and more preferably -5°C or lower. The impact resistance at lower temperatures may be improved by adjusting the glass transition temperature of polymer (D) to 0°C or lower.

### Modified Olefinic Polymer (D-1)

The modified olefinic polymer (D-1) used as (D) component in the present invention is a polymer obtained by modifying an olefinic polymer, such as a homopolymer obtained by polymerizing an olefinic monomer, or a copolymer obtained by co-polymerizing two or more species of olefinic monomers, using a modifier such as unsaturated carboxylic acid, unsaturated carboxylic anhydride or derivatives of these compounds.

The modified olefinic polymer (D-1) is preferably a polymer modified using an unsaturated carboxylic anhydride.

The olefinic monomer preferably has 2 to 20 carbon atoms, and is exemplified by ethylene, propylene, 1-butene, 1-hexene, 1-octene, 1-decene, and 3-methylbutene-1,4-methylpentene-1. Two or more species of these compounds may be used in combination. Among them, straight-chain, olefinic monomers having 2 to 10 carbon atoms are more preferable. Ethylene, propylene and 1-butene are more preferable, and propylene is particularly preferable.

The homopolymer may be exemplified by polyethylene, polypropylene, and polybutene. The copolymer obtained by polymerizing two or more species of α-olefin may be exemplified by ethylene-propylene copolymer, propylene-butene copolymer, propylene-hexene copolymer, and propylene-octene copolymer. Among them, propylene-base polymer is preferable. The propylene-base polymer may be exemplified by propylene homopolymer, and copolymer of propylene and C₂₋₁₀ α-olefin other than propylene. More specifically, propylene-α-olefin random copolymer, and propylene-α-olefin block copolymer may be exemplified. The α-olefin co-polymerizable with propylene is preferably ethylene, 1-butene, or 1-hexene.

In the present invention, each of these homopolymer and copolymer have a melt volume rate (MVR) of 0.1 to 400 cm³/10 min, and more preferably 0.2 to 200 cm³/10 min. Note that MVR in the context of the present invention is measured conforming to JIS K7210, at 180°C, and under a load of 21.17 N.

The unsaturated carboxylic acid, unsaturated carboxylic anhydride or derivatives of these compounds used as a modifier may be exemplified by maleic acid (anhydride), itaconic acid (anhydride), chloromaleic acid (anhydride), citraconic acid (anhydride), butenylsuccinic acid (anhydride), tetrahydrophthalic acid (anhydride), and acid halide, amide, imide, and C₁₋₂₀ alkyl ester or glycol ester of these compounds, and may more specifically be exemplified by maleimide, monomethyl maleate, and dimethyl maleate. Note that "(anhydride)" herein means an unsaturated carboxylic anhydride or unsaturated carboxylic acid. Among them, unsaturated dicarboxylic acid or correspondent anhydride is preferable, and maleic acid (anhydride) or itaconic acid (anhydride) are more preferable. Two or more species of the unsaturated carboxylic acid, unsaturated carboxylic anhydride or derivatives of these compounds may be used in combination.

Amount of the modifier to be added to the olefinic polymer is preferably 0.05 to 5 parts by weight, and more preferably 0.1 to 3 parts by weight, per 100 parts by weight of olefinic polymer. By adjusting the amount of addition of the modifier to 0.05 parts by weight or more, the molded product may be prevented from causing bleed-out of the flame retarder on the surface thereof, may be prevented from being degraded in the glow-wire characteristic, and may be made more ready to ensure electric safety. On the other hand, by adjusting the amount of addition to 5 parts by weight or less, the resin composition may be improved in fluidity in the process of molding, and molding of thin molded products such as connectors may become easy. The amount of feed of the modifier relative to the olefinic polymer may be adjustable, by varying the amount of charge of the modifier relative to the olefinic polymer in the process of manufacturing of the modified olefinic polymer.

Alternatively, a radical generating agent may be added at the same time with the modifier. The radical generating agent may be exemplified by organic peroxide, and azo compound.

Specific examples of the organic peroxide include hydroperoxides such as *tert*-butyl hydroperoxide, cumene hydroperoxide, 2,5-dimethylhexane-2,5-dihydroperoxide, 1,1,3,3-tetramethylbutyl hydroperoxide, *p*-menthane hydroperoxide, and diisopropylbenzene hydroperoxide; dialkyl peroxides such as 2,5-dimethyl-2,5-di(*tert*-butylperoxy) hexine-3, di-*tert*-butyl peroxide, *tert*-butylcumyl peroxide, 2,5-dimethyl-2,5-di(*tert*-butylperoxy)hexane, and dicumyl peroxide; peroxyketals such as 2,2-bis-*tert-*butylperoxybutane, 2,2-bis-*tert*-butylperoxyoctane, 1,1-bis-*tert*-butylperoxycyclohexane, and 1,1-bis-*tert*-butylperoxy-3,3,5-trimethylcyclohexane; peroxyesters such as di-*tert*-butylperoxy isophthalate, *tert*-butylperoxy benzoate, *tert*-butylperoxy acetate, 2,5-dimethyl-2,5-di(benzoylperoxy)hexane, 2,5-dimethyl-2,5-di(benzoylperoxy)hexine-3, *tert*-butylperoxyisopropyl carbonate, and *tert*-butylperoxy isobutyrate; and diacyl peroxides such as benzoyl peroxide, *m*-toluoyl peroxide, acetyl peroxide, and lauroyl peroxide.

Specific examples of the azo compound include 2,2'-azobis(isobutyronitrile), 2,2'-azobis(2-methylbutyronitrile), 1,1'-azobis(cyclohexane -1-carbonitrile), 1-[(1-cyano-1-methylethyl)azo]formamide, 2-phenylazo-4-methoxy-2,4-dimethylvaleronitrile, 2,2'-azobis(2,4,4-trimethylpentane), and 2,2'-azobis(2-methylpropane).

Among these radical generating agents, those having a ten-hour half life temperature of 190°C or lower, and more preferably 120 °C or higher, are particularly preferable, in view of dimensional stability and impact resistace. Among them, benzoyl peroxide, di-*tert*-butyl peroxide, *tert*-butylcumyl peroxide, dicumyl peroxide, 2,5-dimethyl-2,5-di(*tert*-butylperoxy)hexane, 2,5-dimethyl-2,5-di (*tert*-butylperoxy)hexine-3, *tert*-butylperoxy benzoate, 2,5-dimethyl-2,5-di(benzoylperoxy)hexane, and 2,5-dimethyl-2,5-di(benzoylperoxy)hexine-3 are particularly preferable.

The amount of addition of the radical generating agent is preferably 0.01 to 10 parts by weight, and more preferably 0.01 to 1. 0 part by weight, per 100 parts by weight of the olefinic polymer. A sufficient level of modification of the olefinic polymer may be obtained by adjusting the amount of use to 0.01 parts by weight or more, and the polyolefinic polymer may more readily be manufactured, while being prevented from excessively lowering the molecular weight, by adjusting the amount of use to 10 parts by weight or less. The radical generating agent may be comprised also in a dissolved form in an organic solvent , or may be comprised with an inorganic filler such as calcium carbonate, talc or silica.

The modified olefinic polymer (D-1) may be prepared by any methods having been known as methods of converting the olefinic polymer into a reactive one. Examples of the methods include a method of introducing an epoxy compound and a modifier as co-polymerizable components during a polymerization reaction of the olefinic polymer; and a method of mixing a modifier and a radical generating agent to the olefinic polymer, and kneading them under fusion so as to proceed graft copolymerization. In particular for the case where the olefinic polymer is a polypropylene resin, the method of proceeding graft copolymerization of a modifier is simple and preferable.

The modified olefinic polymer (D-1) is preferably maleic anhydride-modified ethylene-propylene copolymer, maleic anhydride-modified ethylene-butene copolymer and maleic anhydride-modified polypropylene, in view of ensuring a good balance among glow-wire characteristic, mechanical strength, and toughness.

In the present invention, the modified olefinic polymer (D-1) preferably has an MVR of 100 to 500 cm³/10 min, in view of less possibility of degradation in the glow-wire characteristic. The modified olefinic polymer may more uniformly be dispersed in the resin composition by adjusting the MVR to 100 cm³/10 min or more, and thereby the tracking resistance and glow-wire characteristic may be improved. On the other hand, generation of gas in the process of molding may more readily be suppressed, and thereby the mechanical strength may be kept at a desirable level, by adjusting the MVR to 500 cm³/10 min or less. The MVR more preferably falls in the range from 100 to 450 cm³/10 min, and still more preferably from 120 to 400 cm³/10 min.

A modified propylene polymer added with 0.05 to 5 parts by weight of a modifier per 100 parts by weight of a polypropylene polymer is particularly preferable as the modified olefinic polymer (D-1) used in the present invention. More preferable amount of addition of the modifier is 0.1 to 3 parts by weight per 100 parts by weight of polypropylene polymer. The MVR preferably falls in the range from 100 to 500 cm³/10 min, more preferably from 100 to 450 cm³/10 min, and still more preferably from 120 to 400 cm³/10 min. Unsaturated carboxylic anhydride may preferably be used as the modifier.

When the polyamide resin is added with a modified olefinic polymer, it is supposed that the terminal of the polyamide resin is terminated by the modified olefinic polymer, as a result of a reaction between the terminal of the polyamide resin and a functional group of the modifier added to the olefinic polymer of the modified olefinic polymer. The polyamide resin having thus terminated terminal may keep a desirable level of glow-wire characteristic of the resin composition, since decomposition of the molecule from the terminal thereof induced by externally applied heat may be suppressed. In particular, for the case where the modified olefinic polymer having such a high level of modification and also having a large MVR, is used, the effect will be distinctive by virtue of its higher reactivity with the polyamide resin terminal.

The modified propylene-base polymer preferably used as the (D-1) component may generally be manufactured by weighing a predetermined amount of polypropylene resin, modifier or radical generating agent, mixing them homogeneously, and then kneading the mixture under fusion. Mixer used herein may be exemplified by tumbler blender, ribbon blender, V-type blender, and Henschel mixer; and melt kneader may be exemplified by mixing roll, kneader, Banbury mixer, Brabender Plastograph, single-screw and double-screw extruders. Temperature of melt kneading is selected preferably in the range from 120 to 300 °C in general, and preferably from 150 to 280°C, depending on the half life temperature of the radical generating agent. Time for kneading is generally adjusted generally to 0.1 to 30 minutes, and preferably to 0.5 to 10 minutes, depending on kneading temperature, species and amount of addition of the radical generating agent.

### Olefin-Vinyl-Base Copolymer(D-2) (Reference)

The olefin-vinyl-base copolymer (D-2) generally usable as the (D) component is a copolymer obtained by polymerizing an olefinic monomer and a vinyl monomer.

The olefinic monomer adoptable herein may be those used for the above-described modified olefinic polymer (D-1).

The vinyl monomer may be exemplified by unsaturated glycidyl group-containing compound such as glycidyl acrylate, glycidyl methacrylate, and monoglycidyl itaconate esters; unsaturated carboxylic acid such as acrylic acid, methacrylic acid, fumaric acid, maleic anhydride, itaconic acid, itaconic anhydride, bicyclo(2,2,1)-5-heptene-2,3-dicarboxylic acid and metal salts of these compounds; unsaturated carboxylic ester compound represented by C₁-₂₀ alkyl ester of (meth) acrylic acid, such as methyl acrylate, ethyl acrylate, *n*-butyl acrylate, isobutyl acrylate, *tert*-butyl acrylate, 2-ethylhexyl acrylate, methyl methacrylate, ethyl methacrylate, *n*-butyl methacrylate, and isobutyl methacrylate; vinyl ester compound such as vinyl acetate, vinyl propionate, vinyl caproate, vinyl caprylate, vinyl laurate, vinyl stearate, and vinyltrialkyl acetate; and vinylaromatic compound such as styrene, methylstyrene, dimethylstyrene, ethylstyrene, isopropylstyrene, chlorostyrene, α-methylstyrene, and α-ethylstyrene. Among them, unsaturated glycidyl group-containing compound, and unsaturated carboxylic acid are preferable. Two or more species of the above-described olefinic monomer and vinyl monomer may be used in combination.

Specific examples of the olefin-vinyl-base copolymer (D-2) include ethylene-glycidyl methacrylate copolymer, ethylene-propylene-glycidyl methacrylate copolymer, ethylene-vinyl acetate-glycidyl methacrylate copolymer, ethylene-ethyl acrylate-glycidyl methacrylate copolymer, ethylene-glycidyl acrylate copolymer, ethylene-vinyl acrylate-glycidyl acrylate copolymer, propylene-g-glycidyl methacrylate copolymer, ethylene-glycidyl acrylate-g-polymethyl methacrylate copolymer, ethylene-glycidyl acrylate-g-polystyrene copolymer, ethylene-glycidyl acrylate-g-polyacrylonitrile-styrene copolymer, ethylene-acrylic acid copolymer, ethylene-methyl methacrylate copolymer, ethylene-g-acrylic acid copolymer, ethylene-ethyl acrylate-g-polymethyl methacrylate copolymer, ethylene-vinyl acetate-g-polystyrene copolymer, ethylene-glycidyl methacrylate-g-polyacrylic acid copolymer, and ethylene-glycidyl methacrylate-g-polymethyl methacrylate copolymer (note that "-g-" stands for graft copolymerization, the same will apply hereinafter). Among them, ethylene-glycidyl methacrylate copolymer, and propylene-g-glycidyl methacrylate copolymer are preferable from the viewpoint of toughness. Two or more species of the olefin-vinyl-base copolymer (D-2) may be used in combination.

Generally, the olefin-vinyl-base polymer (D-2) may be modified by a modifier, and may further be added with a radical generating agent together with the modifier. The compounds used for manufacturing the above-described modified olefinic polymer (D-1) may be adoptable to the radical generating agent.

### Hydrogenated Product (D-3) of Block Copolymer of Vinyl Aromatic Compound Polymer Block "a" and Conjugated Diene Compound Polymer Block "b" (occasionally abbreviated as "hydrogenated product of block copolymer", hereinafter) (Reference)

The hydrogenated product (D-3) of the block copolymer generally usable as the (D) component means a block copolymer of vinyl aromatic compound polymer block "a" and conjugated diene compound polymer block "b", which is decreased in the quantity of aliphatic unsaturated groups in the block "b" due to hydrogenation. Either of linear and branched structure of arrangement of the block "a" and the block "b" may be acceptable. The structure may partially contain a random chain derived from a portion ascribable to random copolymerization between the vinylaromatic compound and the conjugated diene compound. Of these structures, the linear structure is preferable, and an a-b-a-type triblock structure is more preferable. The a-b-a-type block copolymer may contain an a-b-type diblock structure. Two or more species of the hydrogenated product of these block copolymers may be used in combination.

The vinylaromatic compound composing the vinyl aromatic compound polymer block "a" may preferably be exemplified by styrene, α-methylstyrene, vinyltoluene, and vinylxylene, and more preferably by styrene. The conjugated diene compound composing the conjugated diene compound block "b" may preferably be exemplified by 1,3-butadiene, and 2-methyl-1,3-butadiene.

Ratio of repeating unit derived from the vinylaromatic compound in the hydrogenated product of the block copolymer preferably falls in the range from 10 to 70 mol%, more preferably from 10 to 40 mol%, and still more preferably from 15 to 25 mol%. The thermal stability tends to improve by adjusting the ratio to 10 mol% or more, thereby the resin composition may be less likely to cause oxidative degradation in the process of manufacturing and molding. The impact resistance tends to improve by adjusting the ratio to 70 mol% or less. In the aliphatic chain portion of the block copolymer, ratio of unsaturated bond, which is derived from the conjugated diene compound and remains unhydrogenated, is preferably 20% or less, and preferably 10% or less, of the total bonds in the molecule. The aromatic unsaturated bond derived from the vinylaromatic compound may be hydrogenated, wherein the ratio of the hydrogenated aromatic unsaturated bonds may preferably be 25% or less of the total bonds in the molecule. Examples of the hydrogenated product of the block copolymer include various commercial products having the a-b-a-type triblock structure, such as styrene-ethylene-butylene-styrene copolymer (SEBS) having 1,3-butadiene as the conjugated diene compound as a monomer composing the conjugated diene compound polymer block "b"; and styrene-ethylene-propylene-styrene copolymer (SEPS) having 2-methyl-1, 3-butadiene as the conjugated diene compound, all of which are readily available.

Each of these hydrogenated products (D-3) of block copolymer preferably has a number-average molecular weight of 50,000 to 180,000. The finally obtainable resin composition may be improved in the impact resistance and dimensional stability, by adjusting the number-average molecular weight to 50,000 or larger, and thereby the molded products obtained from the resin composition may be improved in the appearance. On the other hand, the finally obtainable resin composition may be improved in the fluidity by adjusting the number-average molecular weight to 180,000 or smaller, and thereby the molding process may be simplified. The number-average molecular weight more preferably falls in the range from 55,000 to 160,000, and particularly preferably from 60,000 to 140,000.

Generally, the hydrogenated product (D-3) of the block copolymer may be modified by a modifier, and may further be added with a radical generating agent together with the modifier. The compounds used for manufacturing the above-described modified olefinic polymer (D-1) may be adoptable to the modifier and the radical generating agent.

The amount of addition of the polymer (D) is 1 to 50 parts by weight, more preferably 3 to 35 parts by weight, and still more preferably 3 to 30 parts by weight, per 100 parts by weight of the polyamide resin (A). The tracking resistance and impact resistance may be improved, and thereby the productivity in injection-molding may be improved, by adjusting the amount of addition to 1 parts by weight or more, meanwhile the flame retardation and glow-wire characteristic may successfully be prevented from being degraded, by adjusting the amount of addition to 50 parts by weight or less.

### Dispersing Agent (E)

The flame-retardant polyamide resin composition of the present invention may preferably be added with dispersing agent (E), for the purpose of preventing coagulation, and instead improving dispersibility of the aminotriazine-base flame retarder, and also for the purpose of suppressing consequent degradation in the toughness and mechanical strength of the resin composition due to coagulation of the flame retarder. The dispersing agent may, however, degrade the flame retardation or glow-wire characteristic of the resin composition, so that it is necessary to carefully select the species thereof and the amount of addition. In the present invention, at least one species selected from the group consisting of carboxylic amide-base wax, metal salt of higher fatty acid, and higher fatty acid ester compound may preferably be used. Among them, the carboxylic amide-base wax is particularly preferable, since it expresses a large effect of improving mold releasing property, and thereby improves the moldability of the resin composition in the process of injection-molding of electric/electronic components such as connectors, without degrading the flame retardation and glow-wire characteristic. Three above-described three species of dispersing agent have not only an effect of improving dispersibility of the aminotriazine-base flame retarder, but also an effect of improving mold releasing performance in the process of molding.

The carboxylic amide-base wax may be exemplified by compounds obtained by dehydration reaction between higher aliphatic monocarboxylic acid and/or polybasic acid and diamine.

The higher aliphatic monocarboxylic acid is preferably saturated aliphatic monocarboxylic acid and hydroxycarboxylic acid having 16 or more carbon atoms, and is exemplified by palmitic acid, stearic acid, behenic acid, montanic acid, and 12-hydroxystearic acid.

The polybasic acid is a dibasic or higher carboxylic acid, and may be exemplified by aliphatic dicarboxylic acids such as maronic acid, succinic acid, adipic acid, sebacic acid, pimelic acid, and azelaic acid; aromatic dicarboxylic acids such as phthalic acid, and terephthalic acid; and alicyclic dicarboxylic acids such as cyclohexyl dicarboxylic acid and cyclohexyl succinic acid.

The diamine may be exemplified by ethylene diamine, 1,3-diaminopropane, 1,4-diaminobutane, hexamethylenediamine, *m*-xylylene diamine, tolylene diamine, *p*-xylylene diamine, phenylene diamine, and isophorone diamine.

The carboxylic amide-base wax is preferably a compound obtained by a polycondensation reaction among stearic acid, sebacic acid and ethylene diamine, and more preferably a compound obtained by a polycondensation reaction among 2 mol of stearic acid, 1 mol of sebacic acid, and 2 mol of ethylene diamine.

The metal salt of higher fatty acid may be exemplified by metal salt of the above-described higher aliphatic monocarboxylic acid. More specifically, calcium stearate, barium stearate, magnesium stearate, aluminum stearate, zinc stearate, and calcium montanate are preferable.

The higher fatty acid ester compound may be exemplified by ester compound formed between the above-described higher aliphatic monocarboxylic acid and alcohol, and more specifically, stearyl stearate, glycerin stearate, and pentaerythritol stearate are prefearble.

The amount of addition of the dispersing agent (E) is preferably 0.01 to 3 parts by weight, and more preferably 0.05 to 1 parts by weight per 100 parts by weight of polyamide resin (A). By adjusting the amount of addition to 0.01 parts by weight or more, the aminotriazine-base flame retarder may more thoroughly be dispersed, and thereby the resin composition may be prevented from being degraded in the mechanical strength, and may be improved in the mold releasing performance in the process of molding. On the other hand, by adjusting the amount of addition to 3 parts by weight or less, the resin composition may be prevented from being degraded in the mechanical strength and flame retardation, and may be made less causative of nonconformities such as plate-out and blooming.

In the present invention, a variety of additives for resin may be added, so far as effects of the present invention will not be impaired. Such variety of additives include flame retarder other than the (B) component; anti-dripping agent; copper-, phosphorus- or sulfur-containing thermal stabilizer; ultraviolet absorber; weatherability modifier; foaming agent; impact resistance modifier other than (D) component; antistatic agent; lubricant; plasticizer; fluiditymodifier; dye; pigment; organic filler; inorganic filler such as talc, wollastonite, and (electroconductive) carbon black; and nucleating agent.

For the purpose of allowing the polyamide resin composition of the present invention to express more excellent characteristics, the polyamide resin composition is preferably manufactured by melt kneading. Representative methods of melt kneading include those using a melt kneader which has generally been put into practical use for molding thermoplastic resins.

For example, (1) a method of weighing the individual component and mixing them at a predetermined ratio typically using a blender to thereby obtain a dry blend, and then subjecting the dry blend to melt kneading using a melt kneader such as a single-screw or multi-screw extruder, roll or Banbury mixer, followed by pelletizing; (2) a method of preliminarily mixing the (B) component and the (C) component typically using a blender, so as to allow the (C) component to adhere onto the surface of powder of the (B) component, and then placing the mixture, together with the (A) component, through a hopper into a melt kneader for melt kneading, followed by pelletizing; (3) a method of preliminarily mixing the (A) component and the (C) component typically using a blender, and then placing the mixture through a hopper of a melt kneader for melt kneading, while feeding the (B) component at a midway portion of a cylinder of the melt kneader, followed by pelletizing; and (4) a method of preliminarily preparing a master pellet which contains excessive amount of the (B) component and/or the(C) component kneaded into the polyamide resin, and then mixing the master pellet with the residual components to be blended by a dry process. Among them, the method (1) is preferable in view of productivity, and the method (2) or (4) is preferably in view of dispersibility of the (B) component and the (C) component.

Methods of manufacturing molded products such as electric/electronic components, using the polyamide resin composition of the present invention, are not specifically limited. Any publicly-known methods such as injection-molding, extrusion molding, hollow molding, heat molding or press molding may be adoptable, using a dry blend which is obtained by weighing the individual components, and then mixing them at a predetermined ratio typically using a blender, or by using a pelletized polyamide resin composition of the methods (1) to (4) described in the above. Among them, injection-molding is preferable, from the viewpoints of productivity and performance of obtained products.

### (Reference) Examples

The present invention will be explained below referring to Examples, without limiting the present invention. Details of the individual components used in Examples described below are as follow. The polyamide resin compositions composed of these components were evaluated by the methods described below.

### [Components Used in Examples]

### Polyamide resin (A)

(A-1) Polyamide 6: "trade name: Novamid (registered trademark) 1010J" from Mitsubishi Engineering-Plastics Corporation, viscosity number = 118 ml/g (measured conforming to ISO307, at 25°C, in a 96%-by-weight sulfuric acid, at a polyamide resin concentration of 0.5% by weight), melting point = 224°C.
(A-2) Polyamide 6/66 Copolymer: "Novamid (registered trademark) 2010J" from Mitsubishi Engineering-Plastics Corporation, viscosity number = 118 ml/g (measured similarly to as the above-described (A-1)), melting point = 198°C.
(A-3) Polyamide 6I/6T Copolymer: "trade name: Novamid (registered trademark) X21" from Mitsubishi Engineering-Plastics Corporation, a copolymer of a salt of hexamethylenediamine and isophthalic acid/a salt of hexamethylenediamine and terephthalic acid, melt viscosity = 140 Pa·s (1400 poise) (measured using a capillary rheometer (from Toyo Seiki Seisaku-sho, Ltd., Capillograph 1C), at 250°C, under a shear rate of 100 sec⁻¹).

### Flame Retarder (B)

(B-1) Melamine Sulfate: "trade name: Apinon 901" from Sanwa Chemical Co., Ltd., sulfur component in melamine sulfate = 9% by weight, average particle size (catalog value) = 17±2.0 µm.
(B-2) Melamine Cyanurate: "trade name: MX44" from Mitsubishi Chemical Corporation, crushed by the present inventors, average particle size (median diameter) = 2 µm.
(B-3) Bromine-Containing Flame Retarder: "trade name: Saytex 8010" from Albemarle Japan Corporation.
(B-4) Antimony Trioxide: "trade name: MIC-3" from Moriroku Holdings Co., Ltd.

### Compound (C)

(C-1) Hindered Phenol-Base Compound: "trade name: Irganox 1098" from CIBA Specialty Chemicals, Inc., N,N'-hexamethylenebis (3,5-di-*tert*-butyl-4-hydroxy-hydrocinnamide)
(C-2) Hindered Phenol-Base Compound: "trade name: Irganox 1010" from CIBA Specialty Chemicals, Inc., pentaerithritol tetrakis[3-(3,5-di-*tert*-butyl-4-hydroxyphenyl)propionate]
(C-3) Hydrotalcite: "trade name: DHT-4A" from Kyowa Chemical Industry Co., Ltd.
(C-4) Hydroxide of Alkaline Earth Metal: calcium hydroxide from Wako Pure Chemical Industries, Ltd.
(C-5) Phosphorus-Containing Compound: "trade name: ADK STAB PEP36" from Asahi Denka Kogyo K.K., bis(2,6-di-*tert-*butyl-4-methylphenyl)pentaerithritol diphosphite.
(C-6) Phosphorus-Containing Compound: sodium hydrophosphite from Wako Pure Chemical Industries, Ltd.
(C-7) Sulfur-containing compound: "Yoshitomi DSTP" from API Corporation, distearylthiodipropionate.

### Polymer (D)

(D-1) Maleic Anhydride-Modified, Ethylene-Butene Copolymer: "trade name: Tafmer A-4085" from Mitsui Petrochemical Industries, Ltd. (reference).
(D-2) Propylene-g-Glycidyl Methacrylate Copolymer (reference): manufactured by a method described below.

One hundred parts by weight of polypropylene, 1 part by weight of glycidyl methacrylate, and 1 part by weight of radical generating agent were weighed, the components were then mixed homogeneously using a Henschel mixer, the mixture was allowed to react under fusion using a double-screw extruder (screw diameter = 30 mm, L/D = 42), at a cylinder temperature of 230°C, and a number of rotation of screw of 300 rpm, to thereby manufacture an olefin-vinyl-base copolymer in a pelletized form.

Polypropylene used herein was "Novatec-PP MA3 (trade name)" from Japan Polypropylene Corporation, glycidyl methacrylate was a product from Mitsubishi Gas Chemical Company, Inc., and the radical generating agent was 1,3-bis(2-*tert*-butylperoxyisopropyl)benzene "Perkadox 14 (trade name)" (from Kayaku Akzo Corporation, ten-hour half life temperature = 121°C). The thus-obtained, olefin-vinyl-base polymer was dried under heating and reduced pressure, and the amount of addition of glycidyl methacrylate was determined by titration using sodium methylate. The amount of addition was found to be 0.5% by weight.
(D-3) Ethylene-Glycidyl Methacrylate Copolymer: "trade name: Bond-fast 2C" from Sumitomo Chemical Co., Ltd. (reference).
(D-4) Maleic Anhydride Modified Styrene-Ethylene/Butyrene-styrene copolymer: "trade name: Tuftec M1943" from Asahi Kasei Corporation, styrene content = 20% by weight (reference).
(D-5) Maleic Anhydride-Modified Polypropylene-1: maleic anhydride-modified polypropylene manufactured by a method described below, MVR = 200 cm³/10 min, amount of addition of maleic anhydride unit = 1.0 part by weight.

### <Referential Example 1>

One hundred parts by weight of polypropylene (from Mitsubishi Chemical Corporation, MVR = 1 cm³/10 min), 2 parts by weight of maleic anhydride (from Mitsubishi Chemical Corporation), and 3.5 parts by weight of benzoyl peroxide ("Nyper BMT-K-40 (trade name)" from NOF Corporation) were respectively weighed, and the components were mixed using a super mixer for one minute, to thereby obtain a mixture. The obtained mixture was then kneaded under fusion using a double-screw extruder (from The Japan Steel Works, Ltd., "model: TEX30HCT", inner diameter of cylinder = 30 mm, L/D = 42), at a temperature of cylinder of 230°C, a number of rotation of screw of 300 rpm, and an amount of discharge of 15k g/hour. The product was extruded from dies into strands, and then cut into pellets of modified propylene polymer-1.
(D-6) Maleic Anhydride-Modified Polypropylene-2: Maleic anhydride-modified polypropylene manufactured by a method described below, MVR = 300 cm³/10 min, amount of addition of maleic anhydride unit = 1.5 parts by weight.

### <Referential Example 2>

One hundred parts by weight of polypropylene (from Mitsubishi Chemical Corporation, MVR = 1 cm³/10 min, 3 parts by weight of maleic anhydride (same as in Referential Example 1), and 4 parts by weight of benzoyl peroxide (same as in Referential Example 1) were respectively weighed, subjected to melt kneading by a method similar to that in Referential Example 1, and then pelletized, to thereby obtain pelletized modified propylenepolymer-2.
(D-7) Maleic Anhydride-Modified Polypropylene-3: maleic anhydride modified polypropylene manufactured by a method described below, MVR=400 cm³/10 min, amount of addition of maleic anhydride unit = 2.0 parts by weight.

### <Referential Example 3>

One hundred parts by weight of polypropylene (from Mitsubishi Chemical Corporation, MVR=1 cm³/10 min), 4 parts by weight of maleic anhydride (same as in Referential Example 1), and 5 parts by weight of benzoyl peroxide (same as in Referential Example 1) were respectively weighed, subjected to melt kneading by a method similar to that in Referential Example 1, and then pelletized, to thereby obtain pelletized modified propylene polymer-3.
(D-8) Maleic Anhydride-Modified Polypropylene-4: maleic anhydride modified polypropylene manufactured by a method described below, MVR = 20 cm³/10 min, amount of addition of maleic anhydride unit = 0.2 parts by weight (reference).

### <Referential Example 4>

One hundred parts by weight of polypropylene (from Mitsubishi Chemical Corporation, MVR = 1 cm³/10 min), 1.5 parts by weight of maleic anhydride (same as in Referential Example 1), and 1.5 parts by weight of benzoyl peroxide (same as in Referential Example 1) were respectively weighed, subjected to melt kneading by a method similar to that in Referential Example 1, and then pelletized, to thereby obtain pelletized modified propylenepolymer-4.
(D-9) Maleic Anhydride-Modified Polypropylene-5: maleic anhydride modified polypropylene manufactured by a method described below, MVR = 600 cm³/10 min, amount of addition of maleic anhydride unit = 2.5 parts by weight (reference).

### <Referential Example 5>

One hundred parts by weight of polypropylene (from Mitsubishi Chemical Corporation, MVR = 1 cm³/10 min), 5 parts by weight of maleic anhydride (same as in Referential Example 1), and 6 parts by weight of benzoyl peroxide (same as in Referential Example 1) were respectively weighed, subjected to melt kneading by a method similar to that in Referential Example 1, and then pelletized, to thereby obtain pelletized modified propylenepolymer-5.

### Dispersing agent

(E-1) Carboxylic Amide-Base Wax: "trade name: WH255" from Kyoeisha Chemical Co., Ltd., a polycondensation product of stearic acid, sebacic acid and ethylene diamine.
(E-2) Calcium Stearate: "trade name: SC-100" from Sakai Chemical Industry Co., Ltd.

### [Method of Evaluating Modified Propylene Polymer]

(1) Amount of Addition of Maleic Anhydride: Using each of the above-described pellets of maleic anhydride-modified polypropylenes (D-5) to (D-9), a film of approximately 100 µm thick was manufactured by hot press method. From each of these films, unreacted maleic anhydride was extracted into an acetone solvent for one hour by Soxhlet' s method, and the film was then allowed to dry for 3 hours in a vacuum drier under reduced pressure. The dried film was measured by infrared spectrometry, so as to determine the amount of addition of maleic anhydride unit based on a peak intensity at 1780 cm⁻¹ attributable to maleic anhydride.
(2) MVR: MVR of each of the pellets of the above-described maleic anhydride-modified polypropylene (D-5) to (D-9) was measured conforming to JIS K7210, at 180 °C, under a load of 21.17 N. The larger the numerical value is, the better the fluidity is.

### [Method of Evaluating Resin Composition]

(1) Flame Retardation: A 127 mm × 12.7 mm test piece of 0.8 mm thick was manufactured according to a method described below, and the flame retardation was measured conforming to UL94. Although V-0 represents a higher level of flame retardation than V-2, the sample having a level of V-2 or better may be judged as being excellent in self-extinguishing property, and acceptable enough when the resin composition molded into products.
(2) Tracking Resistance: A 100 mm×100 mm test piece of 3 mm thick was manufactured according to a method described below, and CTI therefore was measured conforming to IEC60112. The measurement was carried out at 50 V-intervals of applied voltage.
(3) Glow-wire characteristic (GWIT) : Test pieces having a size of 80 mm×80 mm and thickness of 1 mm, 2 mm and 3 mm were manufactured according to a method descried below, and GWIT was measured conforming to IEC60695-2-13. The measurement was carried out at 25°C intervals, and the GWIT was evaluated based on the highest temperature not causative of ignition.
   The higher the temperature is, the better the glow-wire characteristic is.
(4) Tensile Strength: An ISO test piece was manufactured according to a method described below, and tensile strength was measured conforming to ISO527.
(5) Anti-Corrosive Performance for Metals: An 1 cm -1 cm square silver plate (from The Nilaco Corporation) was placed on the test piece used for evaluation in the above-described (1) Flame Retardation, and allowed to stand in a hot air oven at 120°C. After 340 hours, the test piece and the silver plate were taken out, and state of corrosion on the silver plate was visually observed. The test piece showing no corrosion was judged as "○", and the test piece showing corrosion with some changes in color and/or gloss was judged as "×". No deposit due to blooming was observed on the surface of the test pieces after the annealing.

### [(Reference) Examples 1 to 21, Comparative Examples 1 to 10]

### Preparation of Polyamide Resin Compositions and Method of Manufacturing Test Pieces

Polyamide resins and various additives were weighed according to the amounts of addition listed in Tables 1, 2, and mixed using a tumbler mixer for 30 minutes, to thereby obtain a mixture. The obtained mixture was subjected to melt kneading using a double-screw extruder (from The Japan Steel Works, Ltd. , model: TEX30HCT, screw diameter=30 mm), at a cylinder temperature of 260°C, a number of rotation of screw of 200 rpm, and an amount of discharge of 15k g/h, to thereby obtain pelletized polyamide resin composition.

Each of the obtained polyamide resin compositions was dried at 120°C for 8 hours under reduced pressure, and was then molded using an injection-molding machine (from The Japan Steel Works, Ltd., model: J75ED), at a resin temperature of 265°C and a mold temperature of 80°C, to thereby manufacture each of the test pieces for the above-described evaluations (1) to (5). Using the obtained test pieces, the flame retardation, tracking resistance, glow-wire characteristic, tensile strength and anti-corrosive performance for metals were evaluated. Results are shown in Tables 1, 2. No mold deposit was observed in the process of molding in any of Examples and Comparative Examples.

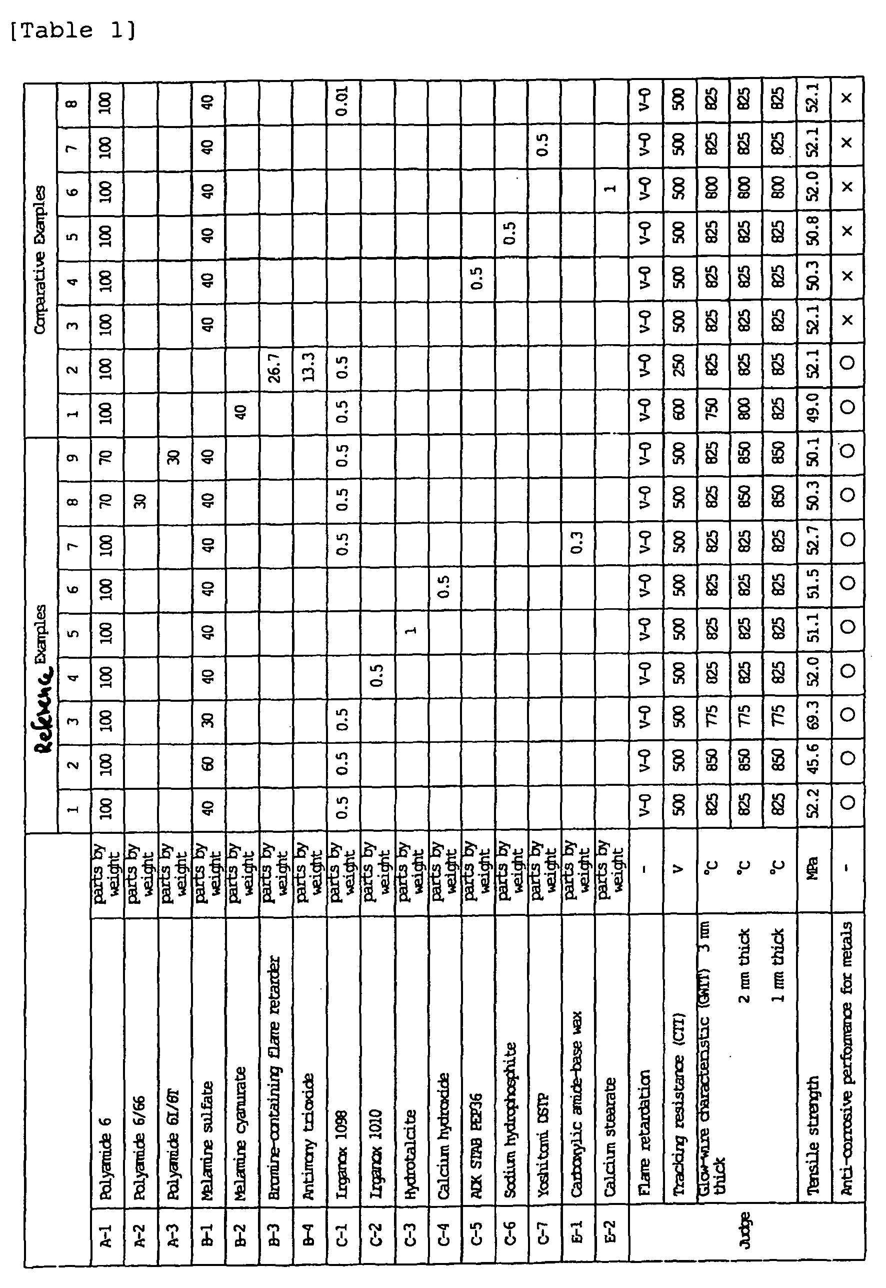

**[Table 2]**

| | | | Examples | | | | | | | | | | | | Comparative Examples | |
|---|---|---|---|---|---|---|---|---|---|---|---|---|---|---|---|---|
| | | | 10 | 11 | 12 | 13* | 14* | 15* | 16* | 17* | 18* | 19 | 20 | 21 | 9 | 10 |
| A-1 | Polyamide 6 | parts by weight | 100 | 100 | 100 | 100 | 100 | 100 | 100 | 100 | 100 | 100 | 70 | 70 | 100 | 100 |
| A-2 | Polyamide 6/66 | parts by weight | | | | | | | | | | | 30 | | | |
| A-3 | Polyamide 6I/6T | parts by weight | | | | | | | | | | | | 30 | | |
| B-1 | Melamine sulfate | parts by weight | 40 | 40 | 40 | 40 | 40 | 40 | 40 | 40 | 40 | 40 | 40 | 40 | 40 | 40 |
| C-1 | Irgaroc 1098 | parts by weight | 0.5 | 0.5 | 0.5 | 0.5 | 0.5 | 0.5 | 0.5 | 0.5 | 0.5 | 0.5 | 0.5 | 0.5 | | |
| C-5 | ACK sma PEP36 | parts by weight | | | | | | | | | | | | | | 0.5 |
| D-1 | Maleic anhydride-modified ethylne-butene copolymer | parts by weight | | | | | | 12 | | | | | | | | |
| D-2 | Propylene-g-glycido methacrylate copolymer | parts by weight | | | | | | | 12 | | | | | | | |
| D-3 | Ethylene-glycidyl methacrylate copolymer | parts by weight | | | | | | | | 12 | | | | | | |
| D-4 | Maleic anhydride-modified SEBS | parts by weight | | | | | | | | | 32 | | | | | |
| D-5 | Maleic anhydride-modified polypropylene-1 | parts by weight | 12 | | | | | | | | | | | | | |
| D-6 | Maleic anhydride-modified polypropylene-2 | parts by weight | | 12 | | | | | | | | | | | | |
| D-7 | Maleic anhydride-modified polypropylene-3 | parts by weight | | | 12 | | | | | | | | | | | |
| D-8 | Maleic anhydride-modified polypropylene-4 Maleic | parts by weight | | | | 12 | | | | | | 12 | 12 | 12 | 12 | 12 |
| D-9 | anhydride-modified polypropylene-5 | parts by weight | | | | | 12 | | | | | | | | | |
| E-1 | Carboxylic amide-base wax | parts by weight | | | | | | | | | | 0.3 | | | | |
| Judge | Flame retardation | - | V-2 | V-2 | V-2 | V-2 | V-2 | V-2 | V-2 | V-2 | V-2 | V-2 | V-2 | V-2 | V-2 | V-2 |
| | Tracking resistance (CTI) | V | 600 | 600 | 600 | 600 | 600 | 600 | 600 | 600 | 600 | 600 | 600 | 600 | 600 | 600 |
| | Glow-wire characteristic (GWTT) 3 nm thick | °C | 825 | 825 | 825 | 800 | 825 | 775 | 800 | 775 | 775 | 800 | 800 | 800 | 800 | 800 |
| | 2 mm thick | °C | 825 | 825 | 825 | 800 | 825 | 800 | 800 | 800 | 775 | 800 | 825 | 825 | 800 | 800 |
| | 1 mn thick | °C | 850 | 850 | 850 | 800 | so | 800 | 800 | 800 | 800 | 800 | 850 | 850 | 800 | 800 |
| | Tensile strength | MPa | 45.2 | 44.3 | 43.2 | 46.3 | 40.0 | 45.4 | 45.7 | 47.3 | 46.2 | 46.6 | 44.3 | 44.5 | 46.2 | 45.5 |
| | Anti-corrosive performance for metals | - | ○ | ○ | ○ | ○ | ○ | ○ | ○ | ○ | ○ | ○ | ○ | ○ | × | × |

| | | | | | | | | | | | | | | | | |
|---|---|---|---|---|---|---|---|---|---|---|---|---|---|---|---|---|
| * = reference | | | | | | | | | | | | | | | | |

### Tables 1, 2 revealed the followings.

The flame-retardant polyamide resin compositions of the present invention were found to be well-balanced resin compositions which are excellent in all of the flame retardation, tracking resistance, glow-wire characteristic, and mechanical strength, and also in anti-corrosive performance for metals (Examples 10 to 12 and 19 to 21). Examples 1 to 9 and 13 to 18 are for reference. Similar effects were expressed also by the aminotriazine-base flame retarder used in the present invention, besides melamine sulfate. The resin compositions prepared without adding (C) component of the present invention (Comparative Examples 3 to 7, 9, 10) were found to be poor in the anti-corrosive performance for metals, and also the resin compositions prepared by adding stabilizers out of the scope of the present invention (Comparative Examples 4, 5, 7, 10) were found to fail in improving the anti-corrosive performance for metals. Also the resin composition having (C)/(B) value lower than the lower limit specified by the present invention (Comparative Example 8) was found to fail in improving the anti-corrosive performance for metals.

The resin composition containing melamine cyanurate as a flame retarder (Comparative Example 1) was found to be successful in suppressing metal corrosion, but was found to fail in achieving the target of the present invention with respect to glow-wire characteristic even at a thickness of 3 mm. The resin composition containing bromine-containing flame retarder as a flame retarder (Comparative Example 2) was found to fail in achieving the target of the present invention with respect to tracking resistance.

The flame-retardant polyamide resin composition of the present invention is excellent in all of flame retardation, glow-wire characteristic, tracking resistance and mechanical strength, and also in anti-corrosive performance for metals, so that it is particularly suitably applied to electric/electronic components having metal contacts or metal terminals, such as connectors, plugs, breakers, switches and electromagnetic switches, which are widely used as components for home electrical appliances, communication instruments, OA equipment, computers or automotive electronic instruments.

## Claims

1. A flame-retardant polyamide resin composition comprising, per 100 parts by weight of polyamide resin (A), 10 to 60 parts by weight of a salt (B) of an aminotriazine compound and at least one compound selected from the group consisting of sulfuric acid, pyrosulfuric acid and organosulfonic acid, at least one compound (C) selected from the group consisting of hindered phenol-base compound, hydrotalcite and hydroxide of alkaline earth metal, and 1 to 50 parts by weight of at least one polymer (D), wherein said polymer (D) is a modified olefinic polymer (D-1),
wherein the ratio of comprising (C) / (B) by weight of the component (C) and the component (B) is 0.0005 to 0.2, and
wherein the modified olefinic polymer (D-1) has a melt volume rate (MVR) of 100 to 500 cm³/10 min, when measured conforming to JIS K7210, at 180°C and under a load of 21.17 N.

2. The flame-retardant polyamide resin composition of Claim 1, wherein the component (B) is melamine sulfate.

3. The flame-retardant polyamide resin composition of Claim 1 or 2, wherein the modified olefinic polymer (D-1) is a modified olefinic polymer comprising an olefinic polymer modified with 0.05 to 5 parts by weight of a modifier, per 100 parts by weight of the olefinic polymer.

4. The flame-retardant polyamide resin composition of any one of Claims 1 to 3, wherein the modified olefinic polymer (D-1) is a modified olefinic polymer comprising an olefinic polymer grafted, by polymerization, with an unsaturated carboxylic anhydride.

5. The flame-retardant polyamide resin composition of any one of Claims 1 to 4, wherein the component (D-1) is maleic anhydride modified polypropylene.

6. The flame-retardant polyamide resin composition of any one of Claims 1 to 5, further comprising 0.1 to 3 parts by weight of at least one dispersing agent (E) selected from the group consisting of carboxylic acid amide-base wax, metal salt of higher fatty acid, and higher fatty acid ester, per 100 parts by weight of the polyamide resin (A).

7. Use of the flame-retardant polyamide resin composition of any one of Claims 1 to 6, for an electric component or electronic component having a metal contact and/or metal terminal.

8. The flame-retardant polyamide resin composition of any one of Claims 1 to 6, wherein the aminotriazine compound is represented by the following formula (1); 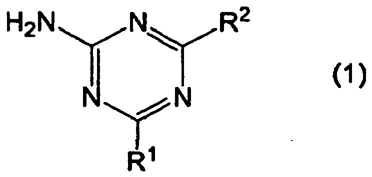 wherein each of R¹ and R² independently represents an amino group, alkyl group having 1 to 4 carbon atoms, or aryl group having 6 to 10 carbon atoms.

9. The flame-retardant polyamide resin composition of any one of Claims 1 to 6 and 8, wherein the salt (B) contains sulfur atom in the range of 3 to 20% by weight.

10. The flame-retardant polyamide resin composition of any one of Claims 1 to 6, 8 and 9, wherein the aminotriazine compound has an average particle size of 0.1 to 50 µm.

11. The flame-retardant polyamide resin composition of any one of Claims 6 and 8 to 10, wherein the dispersing agent (E) is carboxylic acid amide-base wax.

12. The flame-retardant polyamide resin composition of any one of Claims 1 to 6 and 8 to 11, wherein the polyamide resin (A) has a melting point lower than 290°C.

## Patentansprüche

1. Flammfeste Polyamidharzzusammensetzung, umfassend, pro 100 Gewichtsanteile des Polyamidharzes (A), 10 bis 60 Gewichtsanteile eines Salzes (B) einer Aminotriazinverbindung und mindestens einer Verbindung, ausgewählt aus der Gruppe, bestehend aus Schwefelsäure, Dischwefelsäure und organischer Schwefelsäure, mindestens eine Verbindung (C), ausgewählt aus der Gruppe, bestehend aus gehinderter Phenolbasenverbindung, Hydrotalkit und Hydroxid von Erdalkalimetall, und 1 bis 50 Gewichtsanteilen mindestens eines Polymers (D), wobei das Polymer (D) ein modifiziertes olefinisches Polymer (D-1) ist,
wobei das Verhältnis des Umfassens (C)/(B) an Gewicht des Bestandteils (C) und des Bestandteils (B) 0,0005 bis 0,2 beträgt, und
wobei das modifizierte olefinische Polymer (D-1) eine Schmelzvolumenrate (MVR) von 100 bis 500 cm³/10 min aufweist, wenn sie gemäß JIS K7210 bei 180°C und unter einer Last von 21.17 N gemessen ist.

2. Flammfeste Polyamidharzzusammensetzung nach Anspruch 1, wobei der Bestandteil (B) Melaminsulfat ist.

3. Flammfeste Polyamidharzzusammensetzung nach Anspruch 1 oder 2, wobei das modifizierte olefinische Polymer (D-1) ein modifiziertes olefinisches Polymer, umfassend ein olefinisches Polymer, modifiziert mit 0,05 bis 5 Gewichtsanteilen eines Modifikators, pro 100 Gewichtsanteilen des olefinischen Polymers, ist.

4. Flammfeste Polyamidharzzusammensetzung nach einem der Ansprüche 1 bis 3, wobei das modifizierte olefinische Polymer (D-1) ein modifiziertes olefinisches Polymer, umfassend ein olefinisches Polymer, welches durch Polymerisation mit einem ungesättigten Carbonsäureanhydrid gepfropft ist, ist.

5. Flammfeste Polyamidharzzusammensetzung nach einem der Ansprüche 1 bis 4, wobei der Bestandteil (D-1) Maleinsäureanhydrid-modifiziertes Polypropylen ist.

6. Flammfeste Polyamidharzzusammensetzung nach einem der Ansprüche 1 bis 5, weiter umfassend 0,1 bis 3 Gewichtsanteile mindestens eines Dispersionsmittels (E), ausgewählt aus der Gruppe, bestehend aus Carbonsäureamidgrundwachs, Metallsalz von höherer Fettsäure und höherem Fettsäureester, pro 100 Gewichtsanteilen des Polyamidharzes (A).

7. Verwendung der flammfesten Polyamidharzzusammensetzung nach einem der Ansprüche 1 bis 6 für eine elektrischen Bestandteil oder elektronischen Bestandteil, aufweisend einen Metallkontakt und/oder Metallende.

8. Flammfeste Polyamidharzzusammensetzung nach einem der Ansprüche 1 bis 6, wobei die Aminotriazinverbindung dargestellt ist durch die nachstehende Formel (1); 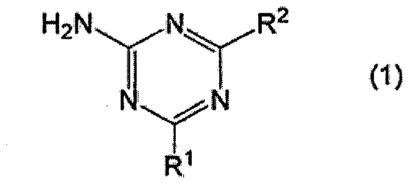 wobei jedes von R¹ und R² unabhängig eine Aminogruppe, Alkylgruppe mit 1 bis 4 Kohlenstoffatomen oder Arylgruppe mit 6 bis 10 Kohlenstoffatomen darstellt.

9. Flammfeste Polyamidharzzusammensetzung nach einem der Ansprüche 1 bis 6 und 8, wobei das Salz (B) Schwefelatom in dem Bereich von 3 bis 20 Gewichts-% enthält.

10. Flammfeste Polyamidharzzusammensetzung nach einem der Ansprüche 1 bis 6, 8 und 9, wobei die Aminotriazinverbindung einen durchschnittlichen Teilchendurchmesser von 0,1 bis 50 µm aufweist.

11. Flammfeste Polyamidharzzusammensetzung nach einem der Ansprüche 1 bis 6 und 8 bis 10, wobei das Dispersionsmittel (E) Carbonsäureamidgrundwachs ist.

12. Flammfeste Polyamidharzzusammensetzung nach einem der Ansprüche 1 bis 6 und 8 bis 11, wobei das Polyamidharz (A) einen niedrigeren Schmelzpunkt als 290°C aufweist.

## Revendications

1. Composition de résine polyamide ignifuge comprenant, par 100 parties en poids de résine polyamide (A), 10 à 60 parties en poids d'un sel (B) d'un composé aminotriazine et d'au moins un composé choisi parmi le groupe consistant en l'acide sulfurique, l'acide pyrosulfurique et l'acide organosulfurique, au moins un composé (C) choisi parmi le groupe consistant en un composé phénolique encombré, un hydrotalcite et un hydroxyde de métal alcalino-terreux, et 1 à 50 parties en poids d'au moins un polymère (D), où ledit polymère (D) est un polymère oléfinique modifié (D-1),
où le rapport de (C)/(B) en poids du composant (C) et du composant (B) se situe dans l'intervalle allant de 0,0005 à 0,2, et
où le polymère oléfinique modifié (D-1) a un indice de fluidité en volume (MVR) allant de 100 à 500 cm³/10 minutes, mesuré selon JIS K7210, à 180°C et sous une charge de 21,17 N.

2. Composition de résine polyamide ignifuge selon la revendication 1, où le composé (B) est le sulfate de mélamine.

3. Composition de résine polyamide ignifuge selon la revendication 1 ou 2, où le polymère oléfinique modifié (D-1) est un polymère oléfinique modifié comprenant un polymère oléfinique modifié avec 0,05 à 5 parties en poids d'un agent modifiant, par 100 parties en poids du polymère oléfinique.

4. Composition de résine polyamide ignifuge selon l'une quelconque des revendications 1 à 3, où le polymère oléfinique modifié (D-1) est un polymère oléfinique modifié comprenant un polymère oléfinique greffé, par polymérisation avec un anhydride carboxylique insaturé.

5. Composition de résine polyamide ignifuge selon l'une quelconque des revendications 1 à 4, où le composé (D-1) est le polypropylène modifié par l'anhydride maléique.

6. Composition de résine polyamide ignifuge selon l'une quelconque des revendications 1 à 5, comprenant en outre, 0,1 à 3 parties en poids d'au moins un agent dispersant (E) choisi parmi le groupe consistant en une cire à base d'amide d'acide carboxylique, un sel métallique d'acide gras supérieur et un ester d'acide gras supérieur, par 100 parties en poids de la résine polyamide (A).

7. Utilisation de la composition de résine polyamide ignifuge selon l'une quelconque des revendications 1 à 6, comme composant électrique ou composant électronique ayant un contact métallique et/ou une borne métallique.

8. Composition de résine polyamide ignifuge selon l'une quelconque des revendications 1 à 6, où le composé aminotriazine est représenté par la formule suivante (1) : 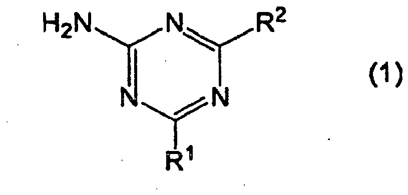 où chacun de R¹ et R² représente indépendamment un groupe amino, un groupe alkyle ayant 1 à 4 atomes de carbone, ou un groupe aryle ayant 6 à 10 atomes de carbone.

9. Composition de résine polyamide ignifuge selon l'une quelconque des revendications 1 à 6 et 8, où le sel (B) contient l'atome de soufre dans la plage allant de 3 à 20% en poids.

10. Composition de résine polyamide ignifuge selon l'une quelconque des revendications 1 à 6, 8 et 9, où le composé aminotriazine a une taille moyenne des particules allant de 0,1 à 50 µm.

11. Composition de résine polyamide ignifuge selon l'une quelconque des revendications 6 et 8 à 10, où l'agent dispersant (E) est une cire à base d'amide d'acide carboxylique.

12. Composition de résine polyamide ignifuge selon l'une quelconque des revendications 1 à 6 et 8 à 11, où la résine polyamide (A) a un point de fusion inférieur à 290°C.
